# EUROPÄISCHE PATENTSCHRIFT

(11) **EP 2 731 901 B1**
(45) Veröffentlichungstag und Bekanntmachung des Hinweises auf die Patenterteilung: **06.05.2015**
(21) Anmeldenummer: 12737256.3
(22) Anmeldetag: 12.07.2012
(51) Int. Cl.: B66F 7/06

(54) **SPINDELHUBTISCH**
SPINDLE-OPERATED ELEVATING TABLE
TABLE ÉLÉVATRICE MUE PAR UNE TIGE FILETÉE

(30) Priorität: 15.07.2011 DE 102011079287
(43) Veröffentlichungstag der Anmeldung: 21.05.2014
(73) Patentinhaber: Albrecht, Elena, 38518 Gifhorn (DE)
(72) Erfinder: LANGEWELLPOTT, Ernst, 38518 Gifhorn (DE)
(74) Vertreter: Taruttis, Stefan Georg
(86) Internationale Anmeldenummer: PCT/EP2012/063701
(87) Internationale Veröffentlichungsnummer: WO 2013/010914

(56) Entgegenhaltungen:
- EP-A1- 0 017 914
- DD-A1- 252 814
- JP-A- 10 114 497
- JP-A- 2003 155 195

## Beschreibung

Die Erfindung betrifft einen Spindelhubtisch mit zumindest einem Paar aneinander angelenkter Scherenglieder, der entsprechend auch als Scherenhubtisch bezeichnet werden kann. Ein Paar Scherenglieder weist ein erstes Scherenglied und ein zweites Scherenglied auf, die an einer gemeinsamen Scherenachse drehbar aneinander angelenkt sind. Die Scherenglieder sind jeweils an ihrem ersten Ende drehbar bzw. schwenkbar gelagert, insbesondere in einem Festlager, und an ihrem gegenüberliegenden zweiten Ende jeweils längsverschieblich geführt, so dass dann, wenn die Scherenachse jeweils im gleichen Abstand vom ersten Ende jedes Scherenglieds angeordnet ist, bei gleichlangen Scherengliedern jeweils ein erstes Ende des einen Scherenglieds und ein zweites Ende des anderen Scherenglieds in beabstandeten, parallelen Ebenen angeordnet sind, und an einer Grundplatte und einer Platte angeordnet sein können, die parallel zueinander beweglich sind. Bevorzugt ist eines der Scherenglieder ortsfest mit seinem ersten Ende an der Grundplatte und das andere der Scherenglieder mit seinem ersten Ende ortsfest an der Platte gelagert, während die den ersten Enden gegenüberliegenden zweiten Enden der Scherenglieder verschieblich gelagert sind.

Der erfindungsgemäße Spindelhubtisch zeichnet sich dadurch aus, dass eine Spindel als Antriebsmittel der Scherenglieder eingesetzt ist und die Spindel beim Verschwenken der Scherenglieder um die Scherenachse parallel verschoben wird, und insbesondere in der Ebene der Scherenachse angeordnet und parallel verschoben wird, und insbesondere jeweils parallel zu einer Linie angeordnet ist, die durch das erste Ende des ersten Scherenglieds und das zweite Ende des zweiten Scherenglieds verläuft, insbesondere parallel zu einer Ebene, in der eine Platte gegen eine Grundplatte parallel verschieblich ist.

### Stand der Technik

Die DE 4336662 A1 zeigt einen Scherenhubtisch, bei dem eine Spindel antriebsseitig in der Scherenachse gelagert ist und in einem Abstand eine Spindelmutter aufweist. Die Spindelmutter ist mittels zweier gegenüberliegender jeweils separat lenkbarer Hebel mit benachbarten Abschnitten der Scherenglieder verbunden.

Die DE 102004027215 A1 beschreibt einen Scherenhubtisch, bei dem eine Spindelmutter zwei Schwenkhebel aufweist, die an benachbarten Abschnitten zweier Scherenglieder angelenkt sind. Die Spindel ist nicht in der Scherenachse gelagert, sondern an den aneinander angelenkten Enden einer Schere.

Die DE 10008966 A1 beschreibt einen Scherenhubtisch, bei dem ein Lenker mit seinem einen Ende in einem Schwenklager an einem Scherenglied gelagert ist und mit seinem anderen Ende an einem Schubschlitten. Der Schubschlitten ist mit einer Spindelmutter und einer Spindel, die längs an einem der Scherenarme geführt ist, längs des einen Scherenglieds verschieblich.

Die JP 10 114497 A zeigt einen Scherenhubtisch mit einem ersten und einem zweiten Scherenglied. An dem ersten Scherenglied ist beidseitig der Schwenkachse der Scherenglieder jeweils ein Schwenkhebel an einem ersten Ende gelagert. Die zweiten Enden der Schwenkhebel sind jeweils schwenkbar mit einer Spindel verbunden und können gegeneinander gezogen werden. Die Enden der Schwenkhebel, die mittels eines Lagers mit der Spindel verbunden sind, laufen gegen einen dem Lager des Schwenkhebels gegenläufigen Abschnitt des zweiten Scherenglieds.

### Aufgabe der Erfindung

Der Erfindung stellt sich die Aufgabe, einen alternativen Scherenhubtisch bereitzustellen, insbesondere einen Scherenhubtisch, der eine effektive Verschwenkung der Scherenglieder gegeneinander erlaubt.

### Beschreibung der Erfindung

Die Erfindung löst die Aufgabe mit dem anspruchsgemäßen Hubtisch, insbesondere mit einem Spindelhubtisch, der eine Spindel aufweist, die vorzugsweise mit einem Antriebsmotor gekoppelt ist. Die Spindel steht mit einer ersten Spindelmutter in Eingriff, welche in einem Schwenklager schwenkbar an einem ersten Schwenkhebel gelagert ist, der auf einer Seite des Schwenklagers einen ersten Arm aufweist und auf der dem ersten Arm gegenüberliegenden Seite des Schwenklagers einen zweiten Arm aufweist. Erfindungsgemäß ist ein Schwenkhebel starr und weist auf oder besteht aus einem ersten und einem zweiten Arm, die sich einander gegenüberliegend auf entgegengesetzten Seiten des Schwenklagers erstrecken. Der erste und der zweite Arm des ersten Schwenkhebels erstrecken sich symmetrisch, insbesondere gegenüberliegend zu der Achse des Schwenklagers, in dem die erste Spindelmutter drehbar gelagert ist. Das Schwenklager, in dem die erste Spindelmutter in dem ersten Schwenkhebel gelagert ist, hat eine Drehachse, die senkrecht zur Längsachse der Spindel angeordnet ist.

Der erste Arm des Schwenkhebels ist drehbar bzw. schwenkbar in einem Abschnitt des ersten Scherenglieds in einem Festlager gelagert, so dass der erste Arm des ersten Schwenkhebels einerseits um die Drehachse des Schwenklagers, in dem die erste Spindelmutter drehbar in dem ersten Schwenkhebel gelagert ist, und andererseits um die Schwenkachse seines Festlagers auf einem Schwenkhebel schwenkbar ist.

Der zweite Arm des ersten Schwenkhebels ist verschieblich gegen einen Abschnitt des zweiten Scherenglieds geführt; insbesondere weist der zweite Arm an seinem Ende gegenüber des Schwenklagers, in dem die Spindelmutter drehbar gelagert ist, eine Laufrolle auf, die gegen das zweite Scherenglied geführt ist.

Das Schwenklager, in dem die Spindelmutter gelagert ist, hat vorzugsweise eine Schwenkachse parallel zur Scherenachse.

Die Spindel führt dadurch die erste Spindelmutter gegen die Scherenachse, dass die Spindel in einem Abstand von der ersten Spindelmutter drehbar in ein Lager eingreift, das schwenkbar mit einem Scherenglied verbunden ist, entweder direkt mit einem Scherenglied oder über einen zweiten Schwenkhebel. Durch die Lagerung der Spindel in einem Abstand von der ersten Spindelmutter drehbar durch Eingriff in ein Lager ist die Spindel in einer Ausführungsform nicht längsverschieblich, sondern ausschließlich drehbar in dem Lager gelagert, so dass eine Rotation der Spindel zu keiner Veränderung des Abstands des Lagers, in das die Spindel drehbar eingreift, von der Spindelmutter führt. In dieser Ausführungsform weist das Lager, mit dem die Spindel drehbar in Eingriff steht, eine radiale Nut oder einen radialen Vorsprung auf, der drehbar gegen Längsverschiebung entlang der Achse der Spindel gesichert in dem Lager drehbar ist, und ist axial zur Spindel belastbar, bzw. das Lager ist ein Axiallager.

In einer weiteren Ausführungsform kann das Lager, mit dem die Spindel in einem Abstand zur ersten Spindelmutter in Eingriff steht, eine zweite Spindelmutter sein, wobei die Spindel in dem axialen Abschnitt, in dem sie mit der ersten Spindelmutter in Eingriff steht, eine gegenläufige Steigung zu dem Abschnitt aufweist, in dem sie mit der zweiten Spindelmutter in Eingriff steht, sodass insbesondere die Spindel in dem Abschnitt, in dem sie mit der ersten Spindelmutter in Eingriff steht, ein gegenläufiges Gewinde zu dem Gewinde in dem beabstandeten Abschnitt, in dem sie mit der zweiten Spindelmutter in Eingriff steht, aufweist.

In einer ersten Ausführungsform ist das Lager, mit dem die Spindel in einem Abstand zur ersten Spindelmutter drehbar in Eingriff steht, in zumindest einem Scherenglied in der Scherenachse schwenkbar gelagert. In dieser Ausführungsform führt die Rotation der Spindel dazu, dass sich der Abstand der ersten Spindelmutter zu diesem Lager verändert und der erste Arm des ersten Schwenkhebels zwischen der Achse, um die die erste Spindelmutter schwenkbar gelagert ist, und seinem Festlager geschwenkt wird. Ein zweiter Arm des ersten Schwenkhebels wird gegenläufig zum ersten Arm um die Achse des Schwenklagers geschwenkt, in dem die erste Spindelmutter an dem ersten Schwenkhebel drehbar gelagert ist. In der Folge schwenkt der erste Schwenkhebel gegenüber der Längsachse der Spindel und führt durch die Belastung des Schwenkhebels gegen das zweite Scherenglied zu dessen Verschwenkung gegenüber dem ersten Scherenglied.

In einer zweiten Ausführungsform ist das Lager, mit dem die Spindel in einem Abstand von der ersten Spindelmutter in Eingriff steht, an einem zweiten Schwenkhebel gelagert, der einen ersten Arm aufweist, der in einem Festlager an einem Scherenglied gelagert ist. Das Festlager, in dem der erste Arm des zweiten Schwenkhebels gelagert ist, ist vorzugsweise in dem zweiten Abschnitt des ersten Scherenglieds angeordnet, der sich gegenüber des ersten Abschnitts des ersten Scherenglieds von der Scherenachse erstreckt. Alternativ kann der erste Arm des zweiten Schwenkhebels an dem zweiten Scherenglied angeordnet sein, insbesondere an dem zweiten Abschnitt des zweiten Scherenglieds, der sich auf derselben Seite der Spindel von der Scherenachse erstreckt, wie der erste Abschnitt des ersten Scherenglieds, an dem das Festlager des ersten Arms des ersten Schwenkhebels angeordnet ist.

In beiden Ausführungsformen mit einem zweiten Schwenkhebel ist das Lager, in das die Spindel drehbar eingreift, an dem zweiten Schwenkhebel angeordnet, dessen erster Arm schwenkbar an einem zweiten Abschnitt eines ersten der Scherenglieder gelagert ist und dessen zweiter Arm, der sich gegenüber eines ersten Arms vom Lager erstreckt, verschieblich gegen einen gegenüberliegenden Abschnitt eines zweiten der Scherenglieder geführt ist.

In beiden Ausführungsformen erlaubt die Rotation der Spindel eine effektive Verschwenkung der Scherenglieder gegeneinander und damit eine Parallelverschiebung der Platte, an der ein Paar Scherenglieder angeordnet ist, gegenüber der Grundplatte.

Bevorzugt ist ein Motor an dem ersten Ende der Spindel angeordnet, das in Bezug auf die Scherenachse gegenüber der ersten Spindelmutter liegt.

Die Erfindung wird nun genauer mit Bezug auf die Figuren beschrieben, die schematisch
- in Figur 1 eine erste Ausführungsform des Spindelhubtischs im auseinandergefahrenen Zustand zeigt,
- in Figur 2 eine erste Ausführungsform im eingefahrenen Zustand,
- in Figur 3 eine zweite Ausführungsform im ausgefahrenen Zustand und
- in Figur 4 eine zweite Ausführungsform im zusammengefahrenen Zustand zeigt.

In den Figuren bezeichnen gleiche Bezugsziffern funktionsgleiche Elemente.

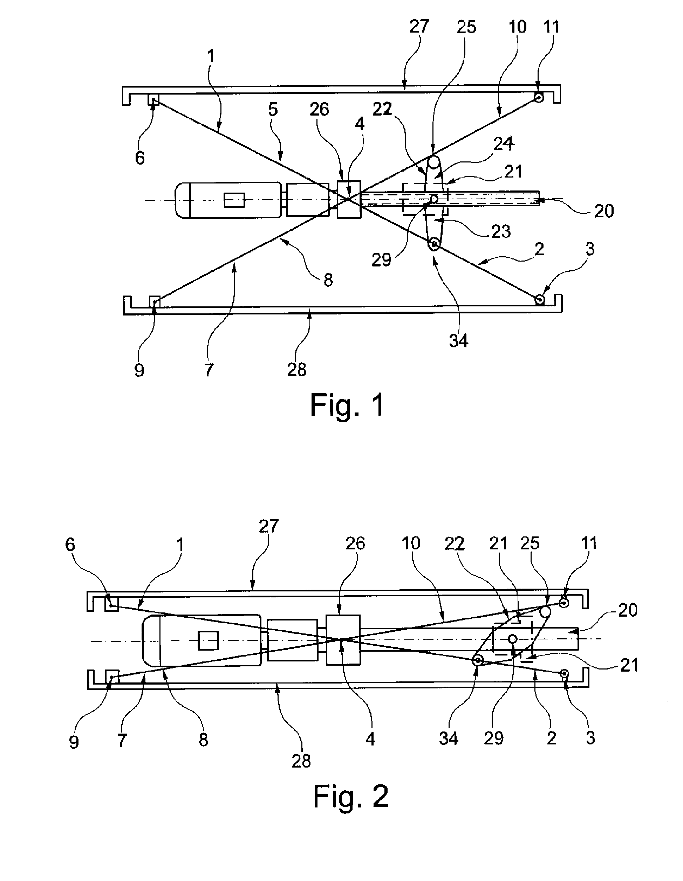

Figur 1 zeigt ein erstes Scherenglied 1, dessen erster Abschnitt 2 sich von dessen zweitem Ende 3 bis zur Schwenkachse 4 erstreckt, und dessen zweiter Abschnitt 5 sich von der Schwenkachse 4 bis zu seinem ersten Ende 6 erstreckt. Das zweite Scherenglied 7 weist einen ersten Abschnitt 8 zwischen seinem ersten Ende 9 und der Scherenachse 4 auf, und einen zweiten Abschnitt 10 zwischen der Scherenachse 4 und seinem zweiten Ende 11.

Die Spindel 20 steht mit einer ersten Spindelmutter 21 in Eingriff, an welcher ein erster Schwenkhebel 22 um eine Achse schwenkbar angeordnet ist, die senkrecht zur Längsachse der Spindel 20 und parallel zur Scherenachse 4 angeordnet ist. Der erste Arm 23 des ersten Schwenkhebels 22 erstreckt sich gegenüber der Achse des ersten Schwenklagers 29, in dem die Spindelmutter 21 zum ersten Schwenkhebel 22 schwenkbar gelagert ist, während sich der zweite Arm 24 des ersten Schwenkhebels 22 gegenüber des ersten Arms 23 von dem ersten Schwenklager 29 erstreckt. Der erste Arm 23 des ersten Schwenkhebels 22 ist in einem Festlager 34 schwenkbar am ersten Abschnitt 2 des ersten Scherenglieds 1 gelagert, während der zweite Arm 24 verschieblich gegen den zweiten Abschnitt 10 des zweiten Scherenglieds 7 geführt ist, vorzugsweise mit einer Laufrolle 25, die gegen das zweite Scherenglied 7 belastet ist.

Die Spindel 20 ist in einem Abstand zur Spindelmutter 21 drehbar in einem Lager 26 gelagert, und steht drehbar mit dem Lager 26 in Eingriff, so dass eine Rotation der Spindel 20 in dem Lager 26 keine Längsverschiebung der Spindel 20 ohne deren Rotation erlaubt, wobei das Lager 26 beispielsweise ein Axiallager sein kann oder, weniger bevorzugt, eine zweite Spindelmutter, wobei die Spindel 20 in dem Abschnitt, in dem sie mit der ersten Spindelmutter 21 in Eingriff steht, eine zu dem Abschnitt gegenläufige Steigung hat, mit dem sie mit der zweiten Spindelmutter als Lager 26 in Eingriff steht.

Figur 2 zeigt im eingefahrenen Zustand des Spindelhubtischs, dass der erste Schwenkhebel 22 durch die ortsfeste Lagerung seines ersten Arms 23 in einem Festlager 34 auf dem ersten Scherenglied 1 und durch die verschiebliche Lagerung seines zweiten Arms 24 gegen das zweite Scherenglied 7 eine Verschwenkung des ersten Schwenkhebels 22 gegen die Längsachse der Spindel 20 erlaubt, und damit eine tiefe heruntergefahrene Position einer Platte 27, die am ersten Ende 6 des ersten Scherenglieds 1 angelenkt ist und verschieblich gegen das zweite Ende 11 des zweiten Scherenglieds 7 gelagert ist.

Weiterhin wird bei Vergleich der Figuren 1 und 2 deutlich, dass die Rotation der Spindel 20 in der Spindelmutter 21 durch die Lagerung des ersten Schwenkhebels 22 schwenkbar an der ersten Spindelmutter 21 und am Festlager 34, das am ersten Scherenglied 1 positioniert ist, eine Hebelwirkung hat, die durch den zweiten Arm 24 des ersten Schwenkhebels 22 zwischen dem ersten Abschnitt 2 des ersten Scherenglieds 1 und dem zweiten Abschnitt 10 des zweiten Scherenglieds 7 wirkt.

Weiterhin wird hier deutlich, dass der erfindungsgemäße Spindelhubtisch in jeder Verfahrposition eine Positionierung der Spindel 20 parallel zwischen einer verfahrbaren Platte 27 und einer gegenüberliegenden Grundplatte 28 erlaubt.

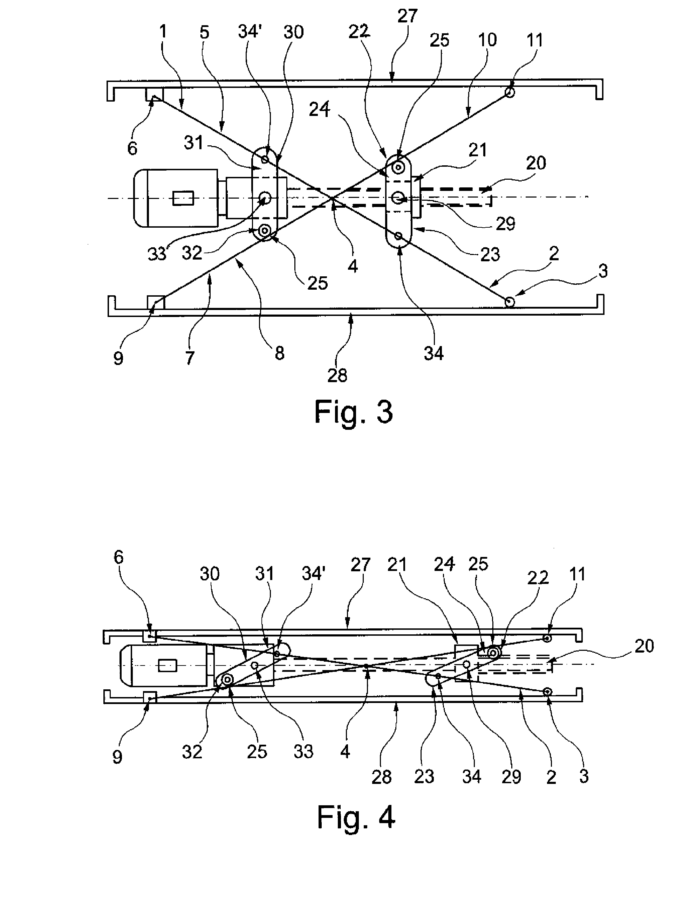

Figur 3 zeigt eine zweite Ausführungsform des Spindelhubtischs, bei der das Lager 26, in das die Spindel 20 eingreift, schwenkbar an einem zweiten Schwenkhebel 30 gelagert ist. Der zweite Schwenkhebel 30 weist einen ersten Arm 31 auf und einen zweiten Arm 32 auf, zwischen denen ein zweites Schwenklager 33 angeordnet ist. Die Achse des zweiten Schwenklagers 33 ist parallel zur Scherenachse und parallel zur Achse des ersten Schwenklagers 29.

Der erste Arm 31 des zweiten Schwenkhebels 30 ist in einem Festlager 34' schwenkbar an einem der Scherenglieder gelagert, vorzugsweise an dem ersten Scherenglied 1 in dessen zweiten Abschnitt 5, der in Bezug zur Scherenachse 4 gegenüber seinem ersten Abschnitt 2 liegt. Der zweite Arm 32 des zweiten Schwenkhebels 30 ist verschieblich gegen das andere Scherenglied geführt, insbesondere gegen das zweite Scherenglied 7 in dessen erstem Abschnitt 8, der gegenüber seinem zweiten Abschnitt 10 liegt, gegen den der zweite Arm 24 des ersten Schwenkhebels 22 verschieblich geführt ist.

Bevorzugt sind der erste Arm 23 des ersten Schwenkhebels 22 und der erste Arm 31 des zweiten Schwenkhebels 30 gleich lang, und bevorzugt sind zusätzlich der zweite Arm 24 des ersten Schwenkhebels 22 und der zweite Arm 32 des zweiten Schwenkhebels 30 gleich lang. Bevorzugter ist der zweite Schwenkhebel 30 parallel zum ersten Schwenkhebel 22 und weist dieselbe Länge wie der erste Schwenkhebel 22 auf.

Figur 4 zeigt den zusammengefahrenen Zustand der zweiten Ausführungsform des Spindelhubtischs von Figur 3 und zeigt, dass auch in dieser Ausführungsform die Spindel 20 in jeder Verfahrstellung parallel zu einer Platte 27 und einer Grundplatte 28 sein kann, zwischen denen die Scherenglieder 1, 7 durch den ersten Schwenkhebel 22 und die Spindel 20 schwenkbar verbunden sind.

### Bezugszeichenliste

- 1: erstes Scherenglied
- 2: erster Abschnitt des ersten Scherenglieds
- 3: zweites Ende des ersten Scherenglieds
- 4: Scherenachse
- 5: zweiter Abschnitt des ersten Scherenglieds
- 6: erstes Ende des zweiten Scherenglieds
- 7: zweites Scherenglied
- 8: erster Abschnitt des zweiten Scherenglieds
- 9: erstes Ende des zweiten Scherenglieds
- 10: zweiter Abschnitt des zweiten Scherenglieds
- 11: zweites Ende des zweiten Scherenglieds
- 20: Spindel
- 21: erste Spindelmutter
- 22: erster Schwenkhebel
- 23: erster Arm des ersten Schwenkhebels
- 24: zweiter Arm des ersten Schwenkhebels
- 25: Laufrolle
- 26: Lager
- 27: Platte
- 28: Grundplatte
- 29: erstes Schwenklager
- 30: zweiter Schwenkhebel
- 31: erster Arm des zweiten Schwenkhebels
- 32: zweiter Arm des zweiten Schwenkhebels
- 33: zweites Schwenklager
- 34, 34': Festlager

## Patentansprüche

1. Spindelhubtisch mit einem ersten und einem zweiten Scherenglied (1, 7), die an einer gemeinsamen Schwenkachse (4) aneinander angelenkt sind, wobei die Scherenglieder (1, 7) jeweils mit einem ersten Ende (6, 9) drehbar an beabstandeten und gegeneinander verschieblichen Drehpunkten gelagert sind und mit einem dem ersten Ende (6, 9) gegenüberliegenden zweiten Ende (3, 11) verschieblich geführt sind, mit einer Spindel (20), die in eine erste Spindelmutter (21) eingreift, die schwenkbar in einem ersten Schwenklager (29) an einem ersten Schwenkhebel (22) gelagert ist, dessen erster Arm (23) in einem ersten Abstand von der Spindelmutter (21) drehbar an einem Abschnitt (2) des ersten Scherenglieds (1) gelagert ist, **dadurch gekennzeichnet, dass** ein zweiter Arm (24) des ersten Schwenkhebels (22) sich gegenüber des ersten Arms (23) vom ersten Schwenklager (29) der ersten Spindelmutter (21) erstreckt und in einem zweiten Abstand von der Spindelmutter (21) verschieblich gegen einen dem Abschnitt (2) des ersten Scherenglieds (1) gegenüberliegenden Abschnitt (10) des zweiten Scherenglieds (7) geführt ist und die Spindel (20) in einem Abstand von der ersten Spindelmutter (21) drehbar in ein Lager (26) eingreift, das schwenkbar mit einem Scherenglied (1, 7) verbunden ist.

2. Spindelhubtisch nach Anspruch 1, **dadurch gekennzeichnet, dass** die Spindel (20) parallel zu einer Linie angeordnet ist, auf der das erste Ende (6) des ersten Scherenglieds (1) und das zweite Ende (11) des zweiten Scherenglieds (7) liegen.

3. Spindelhubtisch nach einem der voranstehenden Ansprüche, **dadurch gekennzeichnet, dass** das Lager (26), in das die Spindel (20) drehbar eingreift, drehbar in der Scherenachse (4) angelenkt ist.

4. Spindelhubtisch nach einem der voranstehenden Ansprüche, **dadurch gekennzeichnet, dass** das Lager (26), in das die Spindel (20) drehbar eingreift, ein Axiallager ist, das die Spindel (20) drehbar und gegen Längsverschiebung gesichert führt.

5. Spindelhubtisch nach einem der voranstehenden Ansprüche, **dadurch gekennzeichnet, dass** das Lager (26), in das die Spindel drehbar eingreift, eine zweite Spindelmutter ist und die Spindel (20) in dem Abschnitt, der mit der zweiten Spindelmutter in Eingriff steht, eine Steigung gegenläufig zu der Steigung des Abschnitts hat, mit dem die Spindel (20) mit der ersten Spindelmutter (21) in Eingriff steht.

6. Spindelhubtisch nach einem der voranstehenden Ansprüche **dadurch gekennzeichnet, dass** das Lager (26), in das die Spindel (20) drehbar eingreift, an einem zweiten Schwenkhebel (30) angeordnet ist, dessen erster Arm (31) schwenkbar an einem zweiten Abschnitt (5) eines der Scherenglieder (1, 7) gelagert ist und dessen zweiter Arm (32), der sich gegenüber des ersten Arms (31) vom Lager (26) erstreckt, verschieblich gegen einen gegenüberliegenden Abschnitt (8) des anderen Scherenglieds (1, 7) geführt ist.

7. Spindelhubtisch nach einem der voranstehenden Ansprüche, **dadurch gekennzeichnet, dass** die Spindel (20) an dem Ende, das in Bezug auf die Scherenachse (4) gegenüber der ersten Spindelmutter (21) liegt, einen Antriebsmotor aufweist.

8. Spindelhubtisch nach Anspruch 7, **dadurch gekennzeichnet, dass** der Antriebsmotor mittels eines Getriebes mit der Spindel (20) verbunden ist, dessen Gehäuse drehfest mit dem Gehäuse des Lagers (26) verbunden ist, in welches die Spindel (20) drehbar eingreift.

9. Spindelhubtisch nach einem der voranstehenden Ansprüche, **dadurch gekennzeichnet, dass** die Drehachse des Lagers (26), in das die Spindel (20) drehbar eingreift, und die Drehachse des ersten Schwenklagers (29), in dem die erste Spindelmutter (21) drehbar gelagert ist, und die Scherenachse (4) in einer Ebene angeordnet sind, in der sich die Längsachse der Spindel (20) erstreckt.

10. Spindelhubtisch nach einem der voranstehenden Ansprüche, **dadurch gekennzeichnet, dass** der erste Abstand, in dem der erste Arm (23, 31) eines Schwenkhebels (22, 30) gelagert ist, dieselbe Länge zur Schwenkachse (29, 33) des Schwenkhebels (22, 30) hat, wie der zweite Abstand, in dem der zweite Arm (24, 32) gegen ein Scherenglied (1, 7) geführt ist.

11. Spindelhubtisch nach einem der voranstehenden Ansprüche, **dadurch gekennzeichnet, dass** der erste Arm (23) des ersten Schwenkhebels (22) in einem Festlager (34) schwenkbar gelagert ist, das im ersten Abschnitt (2) des ersten Scherenglieds (1) angeordnet ist und der zweite Arm (24) des ersten Schwenkhebels (22) in einer Laufrolle (25) gegen den zweiten Abschnitt (10) des zweiten Scherenglieds (7) geführt ist.

12. Spindelhubtisch nach einem der Ansprüche 6 bis 11, **dadurch gekennzeichnet, dass** der erste Arm (31) des zweiten Schwenkhebels (30) in einem Festlager (34') am zweiten Abschnitt (5) des ersten Scherenglieds (1) schwenkbar gelagert ist und der zweite Arm (32) des zweiten Schwenkhebels (30) mit einer Laufrolle (25) gegen den ersten Abschnitt (8) des zweiten Scherenglieds (7) geführt ist.

## Claims

1. Spindle lift table having a first and a second scissor member (1, 7), which are pivoted on a common pivot axis (4), wherein the scissor members (1,7) with a first end (6, 9) each are pivoted at pivot points which are spaced apart and slidable against one another and are slidably guided at a second end (3, 11) lying opposite the first end (6, 9), having a spindle (20), engaging a first spindle nut (21), pivoted in a first pivot bearing (29) at a first pivot lever (22), the first arm (23) of which is pivoted in a first distance from the spindle nut (21) at a section (2) of the first scissor member (1), **characterized in that** a second arm (24) of the first pivot lever (22) opposite the first arm (23) extends from the first pivot bearing (29) of the first spindle nut (21) and is slidably guided in a second spacing from the spindle nut (21) against a section (10) of the second scissor member (7) lying opposite the section (2) of the first scissor member (1), and the spindle (20) in a distance from the first spindle nut (21) rotatably engages a bearing (26) which is mounted pivotable with a scissor member (1, 7).

2. Spindle lift table according to claim 1, **characterized in that** the spindle (20) is arranged in parallel to a line on which the first end (6) of the first scissor member (1) and the second end (11) of the second scissor member (7) are arranged.

3. Spindle lift table according to one of the preceding claims, **characterized in that** the bearing (26), in which the spindle (20) engages, is pivoted at the scissor axis (4).

4. Spindle lift table according to one of the preceding claims, **characterized in that** the bearing (26), to which the spindle (20) rotatably engages, is an axial bearing that rotatably guides the spindle (20) secured against longitudinal displacement.

5. Spindle lift table according to one of the preceding claims, **characterized in that** the bearing (26), into which the spindle rotatably engages, is a second spindle nut and the spindle (20) in the section which engages to the second spindle nut has a pitch contradirectional to the pitch of the section by which the spindle engages the first spindle nut (21).

6. Spindle lift table according to one of the preceding claims, **characterized in that** the bearing (26), to which the spindle rotatably engages, is arranged on a second pivot lever (30), the first arm (31) of which is pivoted at a second section (5 of one of the scissor members (1, 7) and the second arm (32) of which, which extends from the bearing (26) opposite the first arm (31) is slidably guided against an opposite section (8) of the other scissor member (1, 7).

7. Spindle lift table according to one of the preceding claims, **characterized in that** the spindle (20) has a drive motor at the end which in relation to the scissor axis (4) lies opposite the first spindle nut (21).

8. Spindle lift table according to claim 7, **characterized in that** the drive motor is connected to the spindle (20) by means of a gear unit, the housing of which is nonrotatably connected to the housing of the bearing (26), into which the spindle (20) rotatably engages.

9. Spindle lift table according to one of the preceding claims, **characterized in that** the rotation axis of bearing (26), to which the spindle (20) rotatably engages, and the rotation axis of the first pivot bearing (29), in which the first spindle nut (21) is pivoted, and the scissor axis (4) are arranged in a plane in which the longitudinal axis of the spindle (20) extends.

10. Scissor lift table according to one of the preceding claims, **characterized in that** the first spacing, in which the first arm (23, 31) of a pivot lever (22, 30) is pivoted has the same length to the pivot axis (29, 33) of the pivot lever (22, 30) as the second spacing, in which the second arm (24, 32) is guided against a scissor member (1, 7).

11. Scissor lift table according to one of the preceding claims, **characterized in that** the first arm (23) of the first pivot lever (22) pivoted in a fixed bearing (34) which is arranged in a first section (2) of the first scissor member (1), and the second arm (24) of the first pivot lever (22) is guided in a roller (25) against the second section (10) of the second scissor member (7).

12. Spindle lift table according to one of claims 6 to 11, **characterized in that** the first arm (31) of the second pivot lever (30) is pivoted in a fixed bearing (34') on the second section (5) of the first scissor member (1), and the second arm (32) of the second pivot lever (30) is guided with a roller (25) against the first section (8) of the second scissor member (7).

## Revendications

1. Table élévatrice à broche comprenant un premier organe de ciseaux et un second organe de ciseaux (1, 7), articulés l'un à l'autre au niveau d'un essieu pivotant commun (4), où les organes de ciseaux (1, 7) sont montés respectivement rotatifs avec une premier extrémité sur des pivots espacés et mobiles l'un par rapport à l'autre et sont également mobiles avec une seconde extrémité (3, 11) opposée à la première extrémité (6, 9), avec une broche (20) s'engrenant dans un premier écrou de broche (21), écrou monté pivotant dans un premier palier pivotant (29) au niveau d'un premier levier pivotant (22), dont le premier bras (23) est monté rotatif à une première distance de l'écrou de broche (21) au niveau d'une section (2) du premier organe de ciseaux (1), **caractérisé en ce qu'**un second bras (24) du premier levier pivotant (22) s'étend par rapport au premier bras (23) à partir du premier palier pivotant (29) du premier écrou de broche (21) et est guidé de manière mobile à une seconde distance de l'écrou de broche (21) par rapport à une section (10) du second organe de ciseaux (7), section opposée à la section (2) du premier organe de ciseaux (1) et la broche (20) s'engrène de manière rotative dans un palier (26) à une certaine distance du premier écrou de broche (21), palier relié de manière pivotante avec un organe de ciseaux (1, 7).

2. Table élévatrice à broche selon la revendication 1, **caractérisée en ce que** la broche (20) est aménagée parallèle à une ligne sur laquelle reposent la première extrémité (6) du premier organe de ciseaux (1) et la seconde extrémité (11) du second organe de ciseaux (7).

3. Table élévatrice à broche selon l'une des revendications précédentes, **caractérisée en ce que** le palier (26), dans lequel la broche (20) s'engrène de manière rotative, est articulé dans l'essieu à ciseaux (4) de manière rotative.

4. Table élévatrice à broche selon l'une des revendications précédentes, **caractérisée en ce que** le palier (26) dans lequel s'engrène la broche (20) de manière rotative, est un palier axial, guidant la broche (20) de manière rotative et la sécurisant contre tout déplacement longitudinal.

5. Table élévatrice à broche selon l'une des revendications précédentes, **caractérisée en ce que** le palier (26) dans lequel s'engrène la broche (20) de manière rotative, est un second écrou de broche et la broche (20) présente dans une section s'engrenant avec le second écrou de broche, un pas de manière opposée à celui de la section avec laquelle s'engrène la broche (20) avec le premier écrou de broche (21).

6. Table élévatrice à broche selon l'une des revendications précédentes, **caractérisée en ce que** le palier (26) dans lequel s'engrène la broche (20) de manière rotative est prévu au niveau d'un second levier pivotant (30), dont le premier bras (31) est monté pivotant au niveau d'une seconde section (5) de l'un des organes de ciseaux (1, 7) et dont le second bras (32) qui s'étend de manière opposée au premier bras (31) à partir du palier (26), est guidé de façon mobile par rapport à une section opposée (8) de l'autre organe de ciseaux (1, 7).

7. Table élévatrice à broche selon l'une des revendications précédentes, **caractérisée en ce que** la broche (20) présente un moteur d'entraînement à l'extrémité située en face du premier écrou de broche (21) par rapport à l'essieu à ciseaux (4).

8. Table élévatrice à broche selon la revendication 7 **caractérisée en ce que** le moteur d'entraînement est relié à la broche (20) au moyen d'une transmission, broche dont le carter est relié à celui du palier (26) avec blocage en rotation, palier dans lequel s'engrène la broche (20) de manière rotative.

9. Table élévatrice à broche selon l'une des revendications précédentes, **caractérisée en ce que** l'axe de rotation du palier (26) dans lequel s'engrène la broche (20) de manière rotative, et l'axe de rotation du premier palier pivotant (29) dans lequel le premier écrou de broche (21) est monté rotatif, et l'essieu à ciseaux (4) sont disposés dans une plane, dans laquelle s'étend l'axe longitudinal de la broche (20).

10. Table élévatrice à broche selon l'une des revendications précédentes, **caractérisée en ce que** la première distance à laquelle est situé le premier bras (23, 31) d'un levier pivotant (22, 30), a la même longueur par rapport à l'essieu pivotant (29, 33) du levier pivotant (22, 30), que la seconde distance à laquelle est guidé le second bras (24, 32) par rapport à un organe de ciseaux (1,7).

11. Table élévatrice à broche selon l'une des revendications précédentes, **caractérisée en ce que** le premier bras (23) du premier levier pivotant (22) est monté pivotant dans un palier fixe (34) qui est disposé dans la première section (2) du premier organe de ciseaux (1) et le second bras (24) du premier levier pivotant (22) est guidé dans une poulie (25) par rapport à la seconde section (10) du second organe de ciseaux (7).

12. Table élévatrice à broche selon l'une des revendications 6 à 11, **caractérisée en ce que** le premier bras (31) du second levier pivotant (30) est monté pivotant dans un palier fixe (34') au niveau de la seconde section (5) du premier organe de ciseaux (1) et le second bras (32) du second levier pivotant (30) est guidé dans une poulie (25) par rapport à la première section (8) du second organe de ciseaux (7).
